# FASCICULE DE BREVET EUROPEEN

(11) **EP 3 416 770 B1**
(45) Date de publication et mention de la délivrance du brevet: **18.08.2021**
(21) Numéro de dépôt: 17710595.4
(22) Date de dépôt: 17.02.2017
(51) Int. Cl.: B22F 10/25, B22F 10/38, B22F 10/50, B22F 12/86, B23K 26/144, B23K 26/342, B23P 15/00, B33Y 10/00, B33Y 30/00, C21D 7/06, B23K 101/00, B29C 64/118, B22F 12/41, B24C 1/10, C21D 9/50, B22F 3/16

(54) **PROCÉDÉ ET DISPOSITIF DE FABRICATION D'UNE PIÈCE PAR DÉPÔTS SUCCESSIFS DE COUCHES**
VERFAHREN UND VORRICHTUNG ZUR HERSTELLUNG EINES TEILS MITTELS SUKZESSIVER ABSCHEIDUNG VON SCHICHTEN
METHOD AND APPARATUS FOR MANUFACTURING A PART USING SUCCESSIVE DEPOSITION OF LAYERS

(30) Priorité: 19.02.2016 FR 1651359
(43) Date de publication de la demande: 26.12.2018
(73) Titulaire: SAFRAN, 75015 Paris (FR)
(72) Inventeur: CORNU, Daniel, 77550 Moissy-Cramayel (FR); BADREDDINE, Jawad, 77550 Moissy-Cramayel (FR); DESSOLY, Vincent, 77550 Moissy-Cramayel (FR)
(74) Mandataire: Gevers & Orès
(86) Numéro de dépôt international: PCT/FR2017/050363
(87) Numéro de publication internationale: WO 2017/140994

(56) Documents cités:
- EP-A1- 0 529 816
- EP-A1- 2 135 698
- EP-A1- 2 832 528
- GB-A- 2 508 335
- US-A1- 2004 099 983
- US-A1- 2015 108 695
- M. SCHILLING-PRAETZEL: "Influence of Temperature of Shot Peening on Fatigue Life", PROCEEDING: INTERNATIONAL CONFERENCE ON SHOT PEENING (ICSP-5), 17 septembre 1993 (1993-09-17), pages 227-238, XP055326453,

## Description

### DOMAINE TECHNIQUE

L'invention concerne un procédé et un dispositif de fabrication d'une pièce par fabrication additive par dépôts successifs de couches.

### ETAT DE L'ART

L'état de l'art comprend notamment les documents FR-A1-2 816 836, EP-A1-0 529 816, US-A1-2004/099983, EP-A1-2 135 698, GB-A-2 508 335 FR-A1-2 998 496, US-A1-20150108695 et l'article intitulé «Influence of temperature of shot peening on fatigue life », M.Schilling-Praetzel et al de Institut für Metallkunde und Metallphysik.

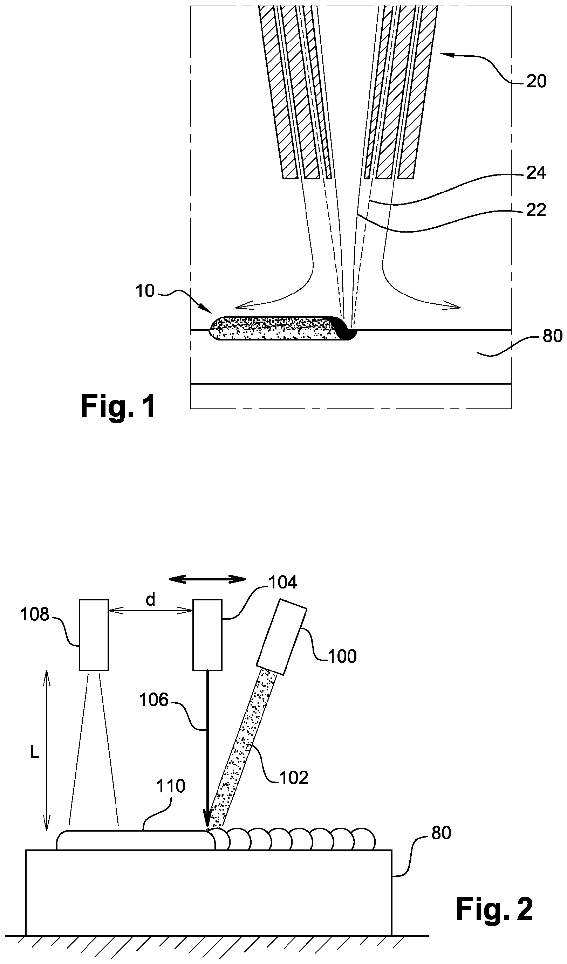

Il existe au moins deux types de fabrication additive d'une pièce : soit la pièce est réalisée par dépôts successifs de matière fondue (figure 1), soit la pièce est réalisée par fusion sélective de lits de poudre.

Le dispositif de la figure 1 permet de fabriquer une pièce par dépôts successifs de couches ou matière fondue. La pièce est réalisée par superposition de couches 10 sur un substrat 80. Le dispositif comprend une tête laser 20 dont le faisceau 22 permet de faire fondre la matière, tel qu'un alliage métallique.

Cette technique de fabrication additive est connue sous différents noms, la plupart desquels sont des marques commerciales de différents constructeurs de dispositifs ou établissements de recherche: la déposition par laser *[Laser Metal Deposition* (LMD)], la déposition directe métal [*Direct Metal Déposition* (DMD)], la déposition directe par laser [*Direct Laser Deposition* (DLD)], la mise en forme par laser [*Laser Engineered Net Shaping* (LENS)], le revêtement par dépôt laser [*laser cladding*], le soudage par dépôt laser et le soudage par fusion de poudre.

Le faisceau laser 22 sert à former un bain de fusion sur le substrat 80, sur lequel une poudre 24 est déposée, par exemple au moyen de la tête laser 20, comme représenté dans le dessin. La poudre fond, en formant une couche 10 ou un cordon adhérant par fusion au substrat. Puis plusieurs couches ou cordons sont superposés sur le premier cordon pour réaliser la pièce. La tête laser 20 est en général commandée à l'aide d'un robot.

Une vaste gamme d'alliages de titane, nickel, cobalt, WC (carbure de tungstène) et acier peut être utilisée, y compris Ti-AI6-4V, Inconel-718, Rene-142 et Stellite-6.

Les sources de laser typiques sont CO2, les fibres Yb et le disque Nd-YAG.

Cette technique est par exemple utilisée dans le domaine aéronautique pour fabriquer des pièces d'une turbomachine d'aéronef.

Au cours de la fabrication additive d'une pièce par la technique précitée, on peut observer une déformation des zones massives liée à l'augmentation des contraintes résiduelles. La solidification rapide cordon par cordon ou couche par couche entraîne plusieurs inconvénients : risque d'oxydation entre les couches pouvant entraîner une mauvaise santé métallurgique (caractéristiques mécaniques dégradées et mauvaise cohésion entre couche), déformation du cordon si les contraintes sont importantes, ce qui entraîne un décalage des couches supérieures, etc. De plus, le transfert thermique directionnel vers le substrat de construction induit une croissance colonnaires des grains, le matériau final étant anisotrope. En effet, il faut contrôler au maximum la génération des contraintes résiduelles et l'anisotropie de la microstructure pour arriver à produire des pièces saines.

La présente invention propose une solution à ces problèmes, qui est simple, efficace et économique.

### EXPOSE DE L'INVENTION

L'invention propose ainsi un procédé de fabrication d'au moins une partie d'une pièce par dépôts successifs de couches tel que défini dans la revendication 1.

L'invention propose ainsi d'améliorer les propriétés des cordons en les traitant juste après leur formation et donc avant qu'il soit recouvert par un nouveau cordon. Le traitement de mise en compression cordon par cordon ou couche par couche permet une modification/suppression des contraintes appliquées aux cordons, un écrouissage de leur matière voire un décapage des oxydes, qui permettent de traiter les aspects de déformation, d'anisotropie de structure et de défauts de liaison. Par écrouissage de surface, on régénère la structure pour éviter la croissance par épitaxie. Le grenaillage peut aussi servir à éliminer la couche d'oxyde avant dépôt de la couche suivante, améliorer l'adhérence ou modifier la microstructure de la couche grenaillée.

Pour cela, l'invention propose d'associer deux procédés très différents à savoir la fabrication additive par dépôts successifs de couches et la mise en compression par grenaillage. Ces deux procédés peuvent utiliser des matériaux sous forme de poudre ou particules, qui peuvent être les mêmes pour ne pas polluer la pièce en cours de formation.

Le procédé selon l'invention peut comprendre une ou plusieurs des étapes ou caractéristiques suivantes, prises isolément les unes des autres ou en combinaison les unes avec les autres :
- l'étape de mise en compression est réalisée lorsque la matière dudit cordon est à une température supérieure à 200°C, et par exemple de 300°C environ,
- le grenaillage est réalisé avec des particules d'un matériau identique au matériau d'une poudre utilisée pour la fabrication des cordons, lesdites particules ayant de préférence une taille différente de la taille de particules de ladite poudre. Ceci permet de simplifier le retraitement et la gestion des poudres ou d'éviter la contamination par d'autres alliages
- le grenaillage est réalisé avec des particules d'un matériau différent du matériau utilisé pour la fabrication des cordons. Ceci permet une plus grande flexibilité sur les contraintes résiduelles générées (profondeur et niveaux atteints), en jouant sur Is duretés relatives entre les médias choisis et le matériau utilisé pour la fabrication additive,
- l'étape de mise en compression est configurée de sorte à permettre :
   i) une introduction de contraintes résiduelles de compression pour contrer les contraintes résiduelles de traction produite par la fusion afin de minimiser les déformations, et/ou
   ii) un décapage d'une éventuelle couche d'oxyde qui se créerait à la surface du cordon, et/ou
   iii) une modification de la microstructure initiale du cordon (anisotrope ou colonnaire) par grenaillage afin d'obtenir une microstructure homogène (multidirectionnelle ou réduction des tailles de grains), et/ou
   iv) une densification de la matière déposée de manière à réduire les porosités induites par le procédé de fabrication additive.

Cette succession d'étape permet d'améliorer les propriétés mécaniques finales de la pièce et d'éviter les phénomènes de fissuration (étape i) et permet également de contrôler la génération d'une ou de plusieurs microstructures dans la pièce. Ces microstructures peuvent être homogènes à l'échelle de la pièce finie ou localisées en fonction des applications industrielles visées (étape iii).

L'invention concerne également un dispositif de mise en œuvre du procédé tel que décrit ci-dessus, et tel que défini dans la revendication 6.

Avantageusement, la tête laser et la buse sont portées par un bras robotisé commun.

### BREVE DESCRIPTION DES FIGURES

L'invention sera mieux comprise et d'autres détails, caractéristiques et avantages de la présente invention apparaîtront plus clairement à la lecture de la description qui suit, faite à titre d'exemple non limitatif et en référence aux dessins annexés, dans lesquels :
- la figure 1 est une vue schématique en perspective d'un dispositif de fabrication d'une pièce par fabrication additive selon la technique antérieure ;
- la figure 2 est une représentation très schématique illustrant le principe général de l'invention,
- la figure 3 est une vue très schématique d'un mode de réalisation du dispositif selon l'invention, et
- la figure 4 est une vue très schématique d'une variante de réalisation du dispositif selon l'invention.

### DESCRIPTION DETAILLEE

La fabrication additive présente de nombreux avantages dont une diminution des délais de fabrication, des coûts et des frais fixes, par rapport à une pièce moulée, injectée ou usinée dans la masse.

Les pièces élaborées par fabrication additive présentent cependant des inconvénients : à la solidification, il apparaît des contraintes résiduelles en traction à chaque couche, qui peuvent aboutir à de la fissuration.

L'invention permet de remédier à ces inconvénients grâce à un dispositif de fabrication tel que défini dans la revendication 6. Dans l'exemple représenté en figure 2, le dispositif comprend :
- une première buse 100 de dépôt de poudre 102 sur le substrat 80,
- une tête 104 d'émission d'un faisceau laser 106, et
- une seconde buse 108 pour la mise en compression du cordon 110 après sa formation et avant d'être recouvert par un nouveau cordon.

Comme dans le cas représenté en figure 1, la fonction de la buse 100 pourrait être intégrée à la tête de laser 104. On aurait alors une tête laser 104 apte à déposer de la poudre 102 sur le substrat 80, et la buse 108.

Le procédé selon l'invention comprend, après chaque étape de formation d'une couche ou d'un cordon, une étape de mise en compression du cordon 110.

Selon l'invention, la mise en compression du cordon 110 est réalisée par grenaillage ou selon un exemple ne rentrant pas dans le cadre de l'invention par refroidissement par gaz du cordon, après le passage du faisceau 106 sur la couche pour traiter couche par couche ou cordon par cordon, et appliquer des contraintes de compression, ou atteindre une microstructure voulue. Le grenaillage ou le refroidissement a des effets différents selon la température du substrat, le positionnement de la tête 104 d'émission du faisceau 106, etc. Cette température peut par exemple être gérée par identification des isothermes de surface de chaque cordon 110.

Dans un cas particulier ne rentrant pas dans le cadre de l'invention, où la mise en compression du cordon est réalisée lorsque le cordon est à température ambiante, la distance L de travail entre la couche et la tête 104 peut être de l'ordre de 150 mm environ. Cette tête 104 peut avoir un diamètre de 6mm et des particules de diamètre de 100 µm environ peuvent être déposées à une pression de 0,2-0,8 MPa pour réaliser le grenaillage.

Dans un cas particulier où la mise en compression est réalisée lorsque le cordon est à haute température (par exemple de l'ordre de 300°C), le grenaillage peut être réalisé à une pression de 0,6 MPa avec des billes de 1,0 mm. Ce grenaillage peut être suivi d'un traitement du type microshot peening, (micro-grenaillage), qui est réalisé à une pression de 0,6 MPa avec des billes de 0,1 mm.

L'application de l'invention sur un cordon en acier de haute dureté (600 - 1000 HV) permet d'atteindre une contrainte surfacique de l'ordre de - 350 à - 500 MPa, une contrainte maximale de compression de l'ordre de - 400 à - 2000 MPa, une profondeur de contrainte maximale de l'ordre de 5 à 20 µm, et une profondeur en compression comprise entre 50 et 100 µm.

Pour effectuer le grenaillage, on peut utiliser une buse de micro-grenaillage pilotée qui utilise de la poudre fine de 10 à 100µm. La surface d'impact peut être de quelques millimètres carrés et la profondeur affectée comprise entre 50 et 150µm.

Ceci est compatible avec les procédés de dépôt direct laser. En effet, les couches fusionnées ont une épaisseur de l'ordre de 200 à 500µm en dépôt direct laser. Les poudres fusionnées sont de même granulométrie ; on peut envisager d'employer les mêmes poudres pour ne pas polluer les pièces. Le grenaillage fonctionne dans les mêmes ordres de grandeur que le procédé de fabrication additive précité.

Pour les aspects contraintes, on peut moduler des modifications de contraintes en profondeur. On peut également bénéficier de l'effet refroidisseur du gaz porteur pour modifier les contraintes et limiter l'oxydation.

Comme évoqué dans ce qui précède, la mise en compression peut également être introduite à l'aide d'un gaz porteur, sans utilisation de média tel que le micro-grenaillage, afin de réaliser une trempe du cordon de matière et y introduire des contraintes résiduelles. Le gaz expulsé peut être du gaz neutre ou réactif. Il a de préférence un débit capable d'accélérer le refroidissement du cordon plus rapidement que par conduction via le support.

La buse 108 de micro-grenaillage ou d'éjection du flux de gaz doit suivre la tête 104 en impactant le cordon solidifié avec un certain retard à déterminer dépendant de la distance d entre la buse et la tête. d est dépendant de la température de refroidissement du cordon et de la température propice à la mise en compression du cordon. De fait, il faut de préférence un pilotage de l'orientation de la buse de grenaillage différentié de celui de la buse de projection.

La tête 104 d'émission et la seconde buse 108, voire également la première buse 100, sont de préférence portées par un bras robotisé commun.

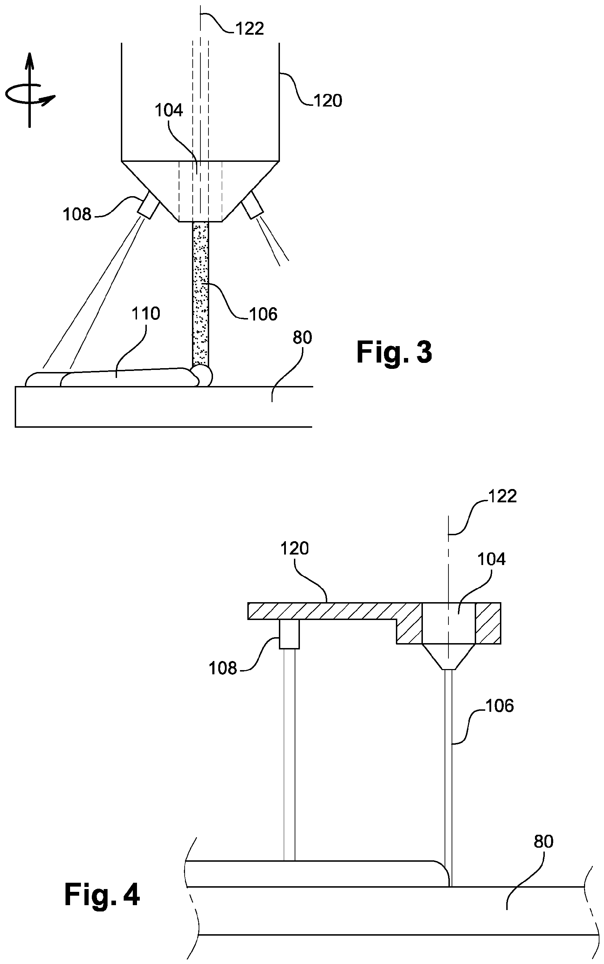

Les figures 3 et 4 représentent deux modes de réalisation du dispositif selon l'invention. Dans la figure 3, le bras 120 est mobile en rotation autour d'un axe 122, par exemple vertical. La tête 104 est centrée sur l'axe 122 et des sorties de buse de micro-grenaillage sont situées sur une circonférence centrée sur l'axe 122. Le bras est déplacé dans un plan contenant l'axe 122, tel que le plan du dessin, et la buse 108 située en aval du faisceau 106, par rapport à la direction de déplacement du bras, est utilisée pour mettre en compression le cordon.

Dans le cas de la figure 4, le bras 120 porte la buse 108 de grenaillage et la tête 104 d'émission du faisceau, la distance entre les deux étant modifiable par translation de la buse vis-à-vis du bras. Le bras est déplaçable en translation ainsi qu'en rotation autour de l'axe 122 de la tête 104.

Si les particules de grenaillage sont de même nature que celles de la poudre, il y a un risque de perte plus importante de poudre. Une solution consiste à utiliser une poudre avec une taille de particules plus grosse de façon à la récupérer par tamisage, ou une poudre en matériau différent, tel qu'en céramique, récupérée par séparation magnétique.

## Revendications

1. Procédé de fabrication d'au moins une partie d'une pièce par dépôts successifs de couches, comprenant les étapes consistant à :
a) déposer une première couche (110) d'un métal fondu sur un substrat (80), de façon à former un premier cordon métallique sur le substrat,
b) déposer une seconde couche d'un métal fondu sur ledit premier cordon, de façon à former un second cordon métallique sur ledit premier cordon, et
c) répéter les étapes a) et b) pour chaque nouvelle couche métallique à déposer au-dessus d'un cordon précédent, et ce jusqu'à la formation de ladite au moins une partie de la pièce,
**caractérisé en ce qu'**il comprend, après n étape(s) de dépôt, n étant supérieur ou égal à 1, une étape de mise en compression du cordon formé, et **en ce que** la mise en compression est réalisée à chaud, c'est-à-dire avant le refroidissement complet dudit cordon, la mise en compression étant réalisée par grenaillage dudit cordon à une température supérieure à 100°C.

2. Procédé selon la revendication précédente, dans lequel l'étape de mise en compression est réalisée lorsque la matière dudit cordon est à une température supérieure à 200°C, et par exemple de 300°C environ.

3. Procédé selon l'une des revendications 1 ou 2, dans lequel le grenaillage est réalisé avec des particules d'un matériau identique au matériau d'une poudre utilisée pour la fabrication des cordons, les particules ayant de préférence une taille différente de la taille de particules de ladite poudre.

4. Procédé selon la revendication 1 ou 2, dans lequel le grenaillage est réalisé avec des particules d'un matériau différent du matériau utilisé pour la fabrication des cordons.

5. Procédé selon l'une des revendications précédentes, dans lequel l'étape de mise en compression est configurée de sorte à permettre :
i) une introduction de contraintes résiduelles de compression pour contrer les contraintes résiduelles de traction produite par la fusion afin de minimiser les déformations, et/ou
ii) un décapage d'une éventuelle couche d'oxyde qui se créerait à la surface du cordon, et/ou
iii) une modification de la microstructure initiale du cordon par grenaillage afin d'obtenir une microstructure homogène, et/ou
iv) une densification de la matière déposée de manière à réduire les porosités induites par le procédé de fabrication additive.

6. Dispositif de mise en œuvre du procédé selon l'une des revendications précédentes, **caractérisé en ce qu'**il comprend :
- une tête laser (104) de fusion d'un métal d'apport en vue de la formation d'un cordon, et
- une buse (108) pour la mise en compression dudit cordon (110), ladite buse (108) étant configurée pour suivre la tête laser (104) en impactant le cordon solidifié avec un certain retard dépendant de la distance d entre la buse (108) et la tête laser (104), d étant fonction de la température de refroidissement du cordon et de la température propice à la mise en compression du cordon.

7. Dispositif selon la revendication précédente, dans lequel la tête laser (104) et la buse (108) sont portées par un bras robotisé (120) commun.

## Patentansprüche

1. Herstellungsverfahren mindestens eines Teils eines Bauteils durch sukzessives Auftragen von Schichten, umfassend die Schritte, bestehend aus:
a) Auftragen einer ersten Schicht (110) aus einem geschmolzenen Metall auf einem Substrat (80) derart, dass ein erstes Metallband auf dem Substrat gebildet wird,
b) Auftragen einer zweiten Schicht aus einem geschmolzenen Metall auf dem ersten Band derart, dass ein zweites Metallband auf dem ersten Band gebildet wird, und
c) Wiederholen der Schritte a) und b) für jede neue, über ein vorangehendes Band aufzutragende Metallschicht, und dies, bis zur Bildung des mindestens einen Teils des Bauteils,
**dadurch gekennzeichnet, dass** es nach n Auftragungsschritt(en), wobei n größer als oder gleich 1 ist, einen Schritt des Komprimierens des gebildeten Bandes umfasst, und dadurch, dass die Komprimierung warm durchgeführt wird, das heißt, vor der vollständigen Abkühlung des Bandes, wobei die Komprimierung durch Kugelstrahlen des Bandes bei einer Temperatur größer als 100 °C durchgeführt wird.

2. Verfahren nach dem vorstehenden Anspruch, wobei der Komprimierungsschritt durchgeführt wird, wenn das Material des Bandes bei einer Temperatur größer als 200 °C, und beispielweise bei ungefähr 300 °C, liegt.

3. Verfahren nach einem der Ansprüche 1 oder 2, wobei das Kugelstrahlen mit Teilchen eines Materials durchgeführt wird, das identisch ist mit dem Material eines zur Herstellung der Bänder verwendeten Pulvers, wobei die Teilchen vorzugsweise eine Größe aufweisen, die sich von der Größe der Teilchen des Pulvers unterscheidet.

4. Verfahren nach Anspruch 1 oder 2, wobei das Kugelstrahlen mit Teilchen eines Materials durchgeführt wird, das sich von dem Material unterscheidet, das zur Herstellung der Bänder verwendet wird.

5. Verfahren nach einem der vorstehenden Ansprüche, wobei der Komprimierungsschritt so ausgelegt ist, dass er Folgendes erlaubt:
i) eine Einführung von Druckeigenspannungen, um den durch die Fusion erzeugten Zugeigenspannungen entgegenzuwirken, um die Verformungen zu minimieren, und/oder
ii) ein Abtragen einer eventuellen, sich auf der Oberfläche des Bandes gebildeten Oxidschicht, und/oder
iii) eine Modifizierung der anfänglichen Mikrostruktur des Bandes durch Kugelstrahlen, um eine homogene Mikrostruktur zu erhalten, und/oder
iv) eine Verdichtung des aufgetragenen Materials derart, dass die durch das additive Herstellungsverfahren bewirkten Porositäten minimiert werden.

6. Vorrichtung zum Ausführen des Verfahrens nach einem der vorstehenden Ansprüche, **dadurch gekennzeichnet, dass** sie umfasst:
- einen Laserkopf (104) zur Fusion eines Zufuhrmetalls zum Zweck der Bildung eines Bandes, und
- eine Düse (108) für die Komprimierung des Bandes (110), wobei die Düse (108) ausgelegt ist, um dem Laserkopf (104) zu folgen, indem sie auf das verfestigte Band mit einer gewissen Verzögerung in Abhängigkeit von dem Abstand d zwischen der Düse (108) und dem Laserkopf (104) auftrifft, wobei d von der Abkühlungstemperatur des Bandes und von der Temperatur, die der Komprimierung des Bandes förderlich ist, abhängt.

7. Vorrichtung nach dem vorstehenden Anspruch, wobei der Laserkopf (104) und die Düse (108) von einem gemeinsamen Roboterarm (120) getragen werden.

## Claims

1. A method for manufacturing at least a portion of a part by successive depositions of layers, comprising the steps consisting of:
a) depositing a first layer (110) of molten metal on a substrate (80), so as to form a first metallic bead on the substrate,
b) depositing a second layer of molten metal on said first bead, so as to form a second metallic bead on said first bead, and
c) repeating steps a) and b) for each new metallic layer to be deposited on top of the previous bead, until the formation of said at least one portion of the part,
**characterised in that** it comprises, after n step(s) of deposition, n being greater than or equal to 1, a step whereby the formed bead is compressed, and **in that** the compression step is performed hot, i.e. before the complete cooling of said bead, the compression step being performed by shot peening of said bead at a temperature of more than 100°C.

2. The method according to the preceding claim, wherein the compression step is achieved when the material of said bead is at a temperature of more than 200°C, and for example of around 300°C.

3. The method according to claim 1 or 2, wherein shot peening is performed with particles of a material that is identical to the material of a powder used for the manufacturing of the beads, the size of said particles being preferably different from the size of the particles of said powder.

4. The method according to claim 1 or 2, wherein shot peening is performed with particles of a material that is different from the material used to manufacture the beads.

5. The method according to any one of the preceding claims, wherein the compression step is configured so as to enable:
i) introduction of residual compression stress to counter the residual fusion-generated tensile stress, in order to minimise deformation of the bead, and/or
ii) pickling of any oxide layer that has developed on the surface of the bead, and/or
iii) modification of the initial bead microstructure by shot peening to achieve a homogeneous microstructure, and/or
iv) densification of the deposited matter to reduce the porosity induced by the additive manufacturing process.

6. A device to implement the method according to any one of the preceding claims, **characterised in that** it comprises:
- a laser head (104) configured to melt the filler metal for the purpose of creating a bead, and
- a nozzle (108) for the compression of said bead (110), the nozzle (108) being configured to follow the laser head (104) to impact the solidified bead (110) with a slight delay that is determined based on the distance d between the nozzle (108) and the laser head (104), d being a factor of the cooling temperature of the bead (110) and the temperature that is suitable for the compression of the bead (110).

7. The device according to the preceding claim, wherein the laser head (104) and the nozzle (108) are supported by a shared robotic arm (120).
